# EUROPEAN PATENT SPECIFICATION

(11) **EP 1 448 313 B1**
(45) Date of publication and mention of the grant of the patent: **18.08.2010**
(21) Application number: 02803901.4
(22) Date of filing: 26.11.2002
(51) Int. Cl.: A01G 25/02, B29C 47/00, B29C 47/02

(54) **DRIP IRRIGATION HOSE**
TROPFBEWÄSSERUNGSSCHLAUCH
TUYAU D'IRRIGATION AU GOUTTE-A-GOUTTE

(30) Priority: 26.11.2001 US 332568 P; 18.07.2002 US 197433
(43) Date of publication of application: 25.08.2004
(73) Proprietor: Cohen, Amir, 20 142 Doar Na Misgav (IL)
(72) Inventor: Cohen, Amir, 20 142 Doar Na Misgav (IL)
(74) Representative: Machtalère, Georges
(86) International application number: PCT/IL2002/000953
(87) International publication number: WO 2003/045577

(56) References cited:
- EP-A- 0 467 386
- EP-A- 0 636 309
- EP-A- 0 730 822
- EP-A- 0 791 290
- US-A- 4 246 936
- US-A- 5 163 622
- US-A- 5 333 793
- US-A- 5 375 770
- US-A- 5 785 785
- US-B1- 6 308 902
- US-B1- 6 371 390

## Description

### FIELD AND BACKGROUND OF THE INVENTION

The present invention relates to drip irrigation hoses.

Drip irrigation hoses are increasingly being used for irrigating various types of plants since they supply the water directly to the root regions of the plants, and therefore are highly conservative of water resources. One type of irrigation hose is constructed by simultaneously extruding a plastic hose and bonding to its inner surface a plurality of emitter elements, or a strip of emitters, spaced longitudinally of the hose for discharging the water at a slow rate via discharge openings formed in the hose. Another type includes a sheet of flexible plastic material formed into a seamed hose, with the emitter elements bonded within the seam, or to another part of the hose, for discharging the water at a slow rate through discharge openings in the hose. The present invention is applicable to both types of drip irrigation hoses.

Examples of drip irrigation hoses of these types are described in US Patent Nos. 4,196,853; 5,163,622; 5,183,208; 5,203,503; 5,246,171; 5,333,793; 5,522,551; 5,620,143; 5,695,127; 5,785,785 and 6,027,048, and in EP-A-0 636 309 and EP-A-0 467 386.

One problem in using drip irrigation hoses is the difficulty in ensuring relatively uniform discharge rates along the length of the hose. This problem is particularly acute where extremely long lengths of the hose are used since the hose itself produces a pressure drop along its length tending to decrease the discharge rate of the emitters at the end of the hose. This sensitivity of the discharge rate to the water pressure is also a problem where the land being irrigated is not flat and even.

Another problem with such drip irrigation hoses is sensitivity to clogging and the difficulty in dislodging clogging particles. In addition, such drip irrigation hoses are frequently used for only a single season, or for relatively few seasons. Accordingly, the cost involved in producing such drip irrigation hoses is a significant factor in their use.

Such drip irrigation hoses also exhibit a tendency to leak water when the hose is not at its normally-operative pressure, e.g., when initially filling the hose or emptying the hose. Such leakage can result in considerable water wastage.

The document WO-A2-02 15670 discloses a drip irrigation hose comprising a tube for conducting pressurized water through its interior and formed with a plurality of tube outlets for discharging the water at longitudinally-spaced locations along the length of the tube; and a plurality of emitter elements secured to the tube at longitudinally-spaced locations along its length to define, with an inner surface of the tube, a plurality of labyrinths each having an inlet in communication with the interior of the tube and an outlet communication with a tube outlet for discharging water from the tube outlet at a slow rate. The labyrinths are defined by a continuous strip of a relatively inelastic material bonded to the inner surface of the tube, and a formation of a relatively elastic material shaped to define a group of teeth for each of the emitter elements producing, with the inner surface of the tube, turbulent flow passageways at each of the longitudinally spaced locations along the length of the continuous strip. That application described a number of constructions of such drip irrigation hoses, as well as methods and apparatus for making such hoses.

The present invention involves further variations in the construction of such drip irrigation hoses.

In EP-A-0 636 309, there is described a drip irrigation hose according to the preamble of claim 1.

It is against this background, and the limitations and problems associated therewith, that the present invention has been developed.

An object of the present invention is to provide constructions of drip irrigation hoses, having a number of important advantages in one or more of the above respects as will be described more particularly below.

To achieve this, the drip irrigation hose of the invention is characterized by the features claimed in the characterizing part of claim 1.

According to the present invention, there is provided a drip irrigation hose according to claim 1.

As will be described more particularly below, the foregoing features in the construction and method of making drip irrigation hoses enables, among other advantages, a reduction in the cost of producing such hoses.

According to further features in some described preferred embodiments, the perforating step is effected to produce an opening through a wall of the relatively elastic material such that the opening is normally closed in the non-pressurized condition of the tube, but automatically opens when the water pressure within the respective labyrinth reaches a predetermined minimum. This features enables water wastage due to leakage to be substantially reduced.

Further features and advantages of the invention will be apparent from the description below.

### BRIEF DESCRIPTION OF THE DRAWINGS

The invention is herein described, by way of example only, with reference to the accompanying drawings, wherein:
Figs. 1, 1a, 2, 2a and 2b are correspondingly-numbered views taken from the above-identified International Application WO-A2-02 15670 illustrating one form of drip irrigation hose;
Fig. 3 is a sectional view illustrating a modification in the drip irrigation hose of Figs. 1 and 2, wherein the hose is formed with a clearance serving as a bypass of the labyrinth in each emitter element in the non-pressurized condition of the hose;
Fig. 3a is an enlarged fragmentary view of Fig. 3 showing the bypass clearance in the non-pressurized condition of the hose, whereas Fig. 3b is a corresponding view showing the closing or disappearance of the clearance in the pressurized condition of the hose;
Figs. 4a and 4b are views corresponding to those of Figs. 3a and 3b, respectively, but illustrating another arrangement for producing the bypass clearance in the non-pressurized condition of the hose;
Fig. 5 is a curve illustrating the pressure/flow-rate relationship shown in Fig. 3 of WO-A2-02 15670, but applied to the latter modifications including a bypass clearance;
Fig. 6 illustrates apparatus corresponding to that shown in Fig. 5 of WO-A2-02 15670, but wherein the relatively elastic material is produced by cross-linking two liquids;
Figs. 6a and 6b are enlarged fragmentary views of parts of the apparatus of Fig. 6;
Fig. 7 illustrates apparatus similar to that of Fig. 22 of WO-A2-02 15670, but modified to produce the relatively elastic material by cross-linking two liquids;
Fig. 7a is an enlarged fragmentary view illustrating a part of the apparatus of Fig. 7;
Figs. 8 and 9 illustrate an emitter element in which the labyrinth includes sequentially-closing clearances from one end of the labyrinth to the other end to provide pressure-compensation in accordance with the description in my U.S. Patent No. 5,400,973;
Figs. 9a and 9b illustrate the clearances along lines A ---- A and B ---- B of Fig. 9 at the opposite ends of the labyrinth in the non-pressurized condition of the drip irrigation hose;
Fig. 10 is a three-dimensional view illustrating a modification in the construction of the emitter strip to be included in the drip irrigation hose;
Fig. 11 illustrates the emitter strip of Fig. 10 as applied to the inner surface of the outer tube for producing the drip irrigation hose;
Fig. 11a is a transverse section of the drip irrigation hose of Fig. 11;
Fig. 12 illustrates apparatus, similar to that of Fig. 7 for making the drip irrigation hose of Fig. 11 including the emitter strip of Fig. 10;
Fig. 13 illustrates apparatus similar to that of Fig. 5c of WO-A2-02 15670, for making the drip irrigation hose illustrated in Fig. 11;
Fig. 14 illustrates a modification in the apparatus of Fig. 22 of WO-A2-02 15670, for applying an adhesive/strengthening coating to the inner surface of the outer tube before bonding same to the drip irrigation emitter strip;
Fig. 15 is a fragmentary three-dimensional view illustrating the drip irrigation hose produced by the apparatus of Fig. 14;
Fig. 16 is a longitudinal sectional view of the drip irrigation hose of Fig. 15;
Figs. 16a and 16b are enlarged transverse sectional views of the drip irrigation hose of Fig. 16 at the opposite ends of a labyrinth;
Figs. 17a and 17b are views corresponding to Figs. 16a and 16b but illustrating a still further construction of drip irrigation tube in accordance with the present invention;
Fig. 18 is a fragmentary view illustrating the drip irrigation hose constructed in accordance with the invention, Fig. 18a being a transverse sectional view of Fig. 18, Fig. 18b being an enlarged perspective view of a portion of Fig. 18, Fig. 18c being a greatly enlarged perspective view of the outlet end of the emitter element of Fig. 18b showing the outer tube and its outlet in broken lines, and Fig. 18d being a transverse sectional view of Fig. 18c along line d ---- d;
Figs. 19, 19a, 19b, 19c and 19d are views corresponding to Figs. 18, 18a, 18b, 18c and 18d, respectively, of the drip irrigation hose constructed in accordance with the invention, Fig. 19e being a view corresponding to Fig. 19d when the hose is pressurized; and
Fig. 20, 20a, 20b and 20c are views, corresponding to Figs. 19, 19a, 19d and 19e, respectively, illustrating the drip irrigation hose constructed in accordance with the present invention.

It is to be understood that the foregoing drawings, and the description below, are provided primarily for purposes of facilitating understanding the conceptual aspects of the invention and various possible embodiments thereof, including what is presently considered to be preferred embodiments. In the interest of clarify and brevity, no attempt is made to provide more details than necessary to enable one skilled in the art, using routine skill and design, to understand and practice the described invention. It is to be further understood that the embodiments described are for purposes of example only, and that the invention is capable of being embodied in other forms and applications as defined in the claims.

### DESCRIPTION OF PREFERRED EMBODIMENTS

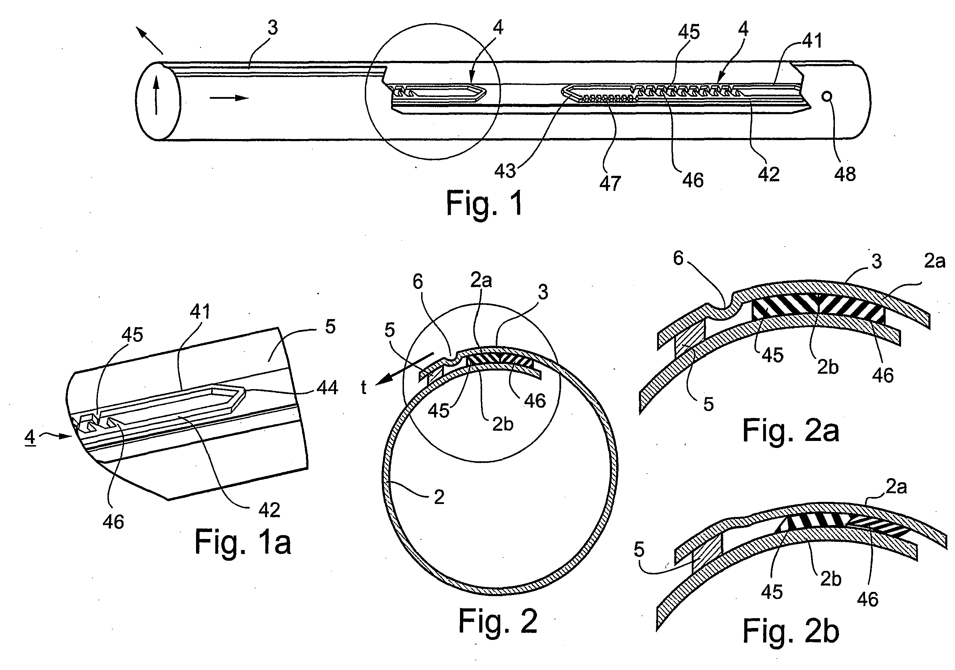

As indicated earlier, Figs. 1 and 2 illustrate a drip irrigation hose corresponding to the constructions illustrated in Figs. 1 and 2 of the above-cited WO-A2-2 15670.

Briefly, the drip irrigation hose illustrate in Figs. 1 and 2 comprises a sheet 2 of a thin, flexible plastic material having opposed outer edge portions 2a, 2b which are overlapped and bonded together to form a seam 3 extending longitudinally of the so-produced tube for conducting pressurized water therethrough. A plurality of emitter elements, each generally designated 4, are bonded to and between the overlapping portions 2a, 2b of the sheet 2 at longitudinally-spaced locations along the seam 3, and define a plurality of restricted flow passageways for discharging water from outlets 48 in the seamed hose at a slow rate.

The overlapping portions 2a, 2b of the flexible sheet are bonded together both by the emitter elements 4, and by a continuous, longitudinally-extending rib 5 extending along the outer edge of the outer overlapping portion 2a. The outer overlapping portion 2a is formed with an inwardly-extending slack 6 between the rib 5 and the emitter elements 4. The purpose of slack 6 is to cause the seamed hose, when pressurized by the water flowing through it, to tauten the hose wall, and thereby to apply a tangential force to the emitter elements 4 within the seam 3, such that, thereafter, the emitter elements will control the discharge through the hose outlets according to the pressure of the water within the hose. Such an arrangement decreases the sensitivity of the water discharge rates to changes in pressure of the water within the hose. The tangential force produces relative movement between the overlapping ends of the hose, thereby also tending to dislodge clogging particles within the emitter elements.

Each emitter element 4 includes a pair of spaced longitudinally-extending plastic strips 41, 42 closed at its opposite ends by converging transversely-extending strips 43, 44. Each emitter element further includes a plurality of teeth 45, 46 alternatingly projecting from one longitudinal strip towards the other longitudinal strip to define a labyrinth producing a turbulent flow passageway for the water through the emitter element. The water is inletted into the emitter element via inlet openings 47 (Fig. 1) in longitudinal strip 42 at the inlet end of the labyrinth defined by the teeth 45, 46, and is outletted from the emitter element via the outlet opening 48 in the plastic hose 2 at the outlet end of the respective labyrinth.

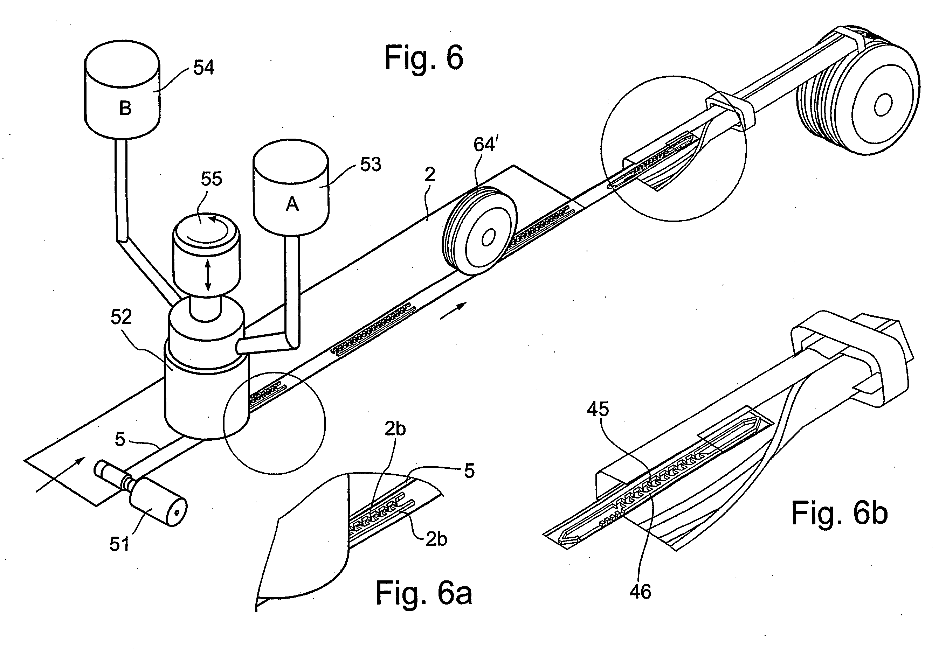

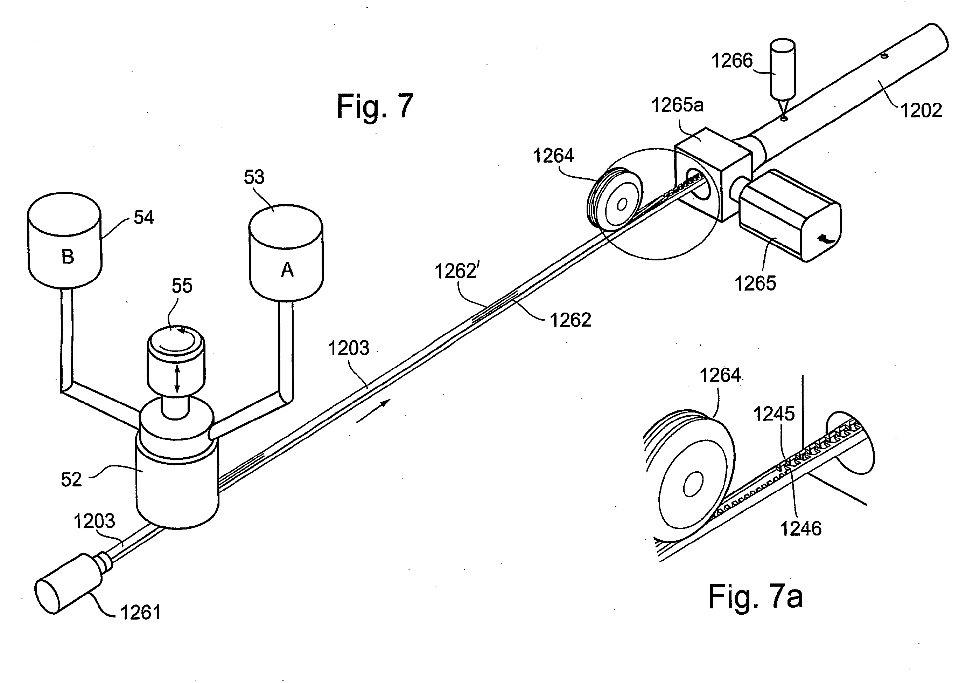

The continuous rib 5 at the outer edge of the seam 3 is made of a relatively inelastic material. The emitter elements 4, however, are made of a relatively elastic material which is softer, more pressure-deformable than the rib 5, and tends to return to its original shape when the pressure is removed. A preferred relatively inelastic material for the continuous rib 5 is polyethylene, and a preferred relatively elastic material for elements 41 - 47 of the emitter elements 4 is an elastomer, preferably one selected from the group consisting of EPDM (ethylene propylene rubber), NBR (nitrite rubber), TPE (Evoprene Thermoplastic Elastomer) compounds, particularly Evoprene G and Super G grades which bond well to polyethylene and propylene or a thermosetting elastomer prepared by cross-linking two liquids as described below with respect to Figs. 6 and 7. A preferred material for making the plastic tube is polyethylene.

It will thus be seen that the plurality of emitter elements 4 are incorporated in the seam of the seamed plastic tube 2 and include a relatively elastic formation in the form of teeth 45, 46 of relatively elastic plastic material, and a relatively stiff formation in the form of rib 5 of relatively inelastic material, and that both formations are in direct contact with, and directly bonded to, the inner surface of the plastic material defining the tube 2. It will also be seen that the relatively elastic formation, namely the teeth 45, 46, is pressure-deformable and is located with respect to the relatively stiff formation, namely rib 5, such as to change the labyrinth of the respective emitter element in response to the pressure of the water in the tube at the location of the respective emitter element, and thereby to regulate the water discharge rate at the respective outlet 48.

Thus, when the hose is first filled with water, the water causes the hose to assume the circular shape illustrated in Fig. 2. In this initial, unpressurized condition of the hose, there is the slack 6 between the outer rib 5 and the emitter elements 4, as shown particularly in Fig. 2a; in this initial condition, there is no significant tangential or shear force applied to the emitter elements 4, and the height of the emitter elements 4 is and remains substantially the same as the height of the rib 5.

As the hose 2 is filled with pressurized water, the pressure tends to increase the diameter of the hose 2. Since the rib 5 is firmly bonded between the overlapping sheet portions 2a, 2b of the seam 3 at the outer edge of the overlying portion 2a, and since the rib 5 is relatively stiff, whereas the emitter elements 4 constituting the relatively elastic formation are pressure-deformable, the increase in pressure within the hose 2 tautens the slack 6, and at the same time tends to move hose edges 2a, 2b in opposite directions, thereby applying a tangential or shear force to the emitter elements. Since these elements are of a relatively elastic or deformable material, this tangential force changes the shape of the turbulent flow passageways defined by them to change the resistance to flow. Thus, an increase in the pressure within the hose will compress the relatively elastic elements, to thereby reduce the cross-sectional area of the flow path, whereas a decrease in the hose pressure will permit the relative elastic elements to return to their original shapes.

As more particularly described in the above-cited WO-A2-02 15670, the pressure-compensation in this construction is effected by two forces, namely: the tangential force tending to change the shape of the turbulent flow passageway; and the compressional force tending to reduce the cross-sectional area of the flow path. The above two forces actually act in parallel; however, the tangential force is predominant in the lower pressure ranges until the slack 6 is taken-up, whereupon the compressional force becomes predominant in the higher pressure ranges.

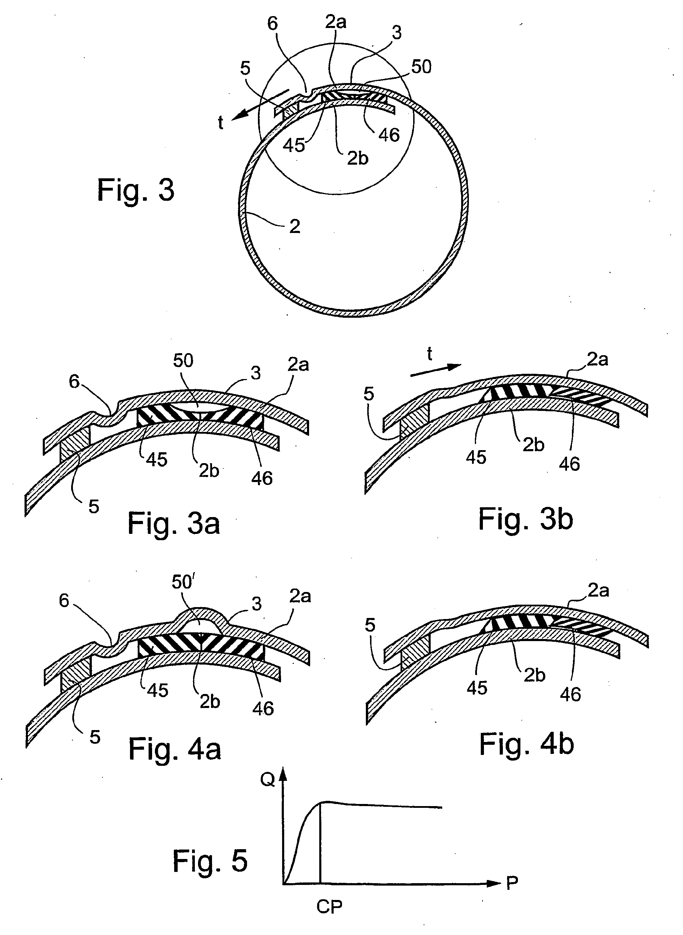

Figs. 3, 3a and 3b illustrate a drip irrigation hose similar to that of Figs. 1 and 2 of International Application WO-A2-02 15670 as described above, and therefore to facilitate understanding, the corresponding parts are identified by the same reference numerals.

One important difference in the construction of the drip irrigation hose illustrated in Fig. 3 is the provision of a bypass clearance, shown at 50 in Figs. 3 and 3a, between the inner face of the plastic tube 2 and the tips of the teeth 45, 46 of relatively elastic material defining the labyrinths. As shown in Fig. 3a, the tips of all the teeth 45, 46 are reduced in height so as to produce, in the non-pressurized condition of the hose, the clearance 50 which bypasses all the labyrinths such that a laminar flow will be produced through clearance 50 bypassing all the labyrinths. However, as shown in Fig. 3b, when the hose is pressurized, clearance 50 is closed by the deformation of the teeth, thereby removing the laminar bypass flowpath for the respective labyrinth via clearance 50, and forcing the water to flow through the turbulent flowpath of the respective labyrinth defined by teeth 45, 46. It will be appreciated that after the laminar bypass flowpath has been removed, regulation thereafter in response to pressure will be effected by changing the configuration of the turbulent flowpath of the respective labyrinth.

Figs. 4a and 4b are views corresponding to Figs. 3a and 3b but illustrating a modification in the construction of the hose to produce similar results. Thus, as shown in Fig. 4a, the clearance 50', corresponding to clearance 50 in Fig. 3, is produced in the non-pressurized condition of the hose by providing a longitudinally-extending slack in the outer tube 2, rather than by decreasing the height of the tips of the teeth 45, 46 as in Fig. 3. As shown in Fig. 4b, when the hose is pressurized, outer tube 2 is tautened such that clearance 50' of Fig. 4a is closed, thereby also removing the laminar-flow bypass of the labyrinth defined by the teeth 45, 46, in the same manner as described above with respect to Fig. 3.

The constructions of Figs. 3 and 4 also produce an initial rapid build-up in the flow through the outer tube 2 with an increase in pressure, and thereafter a relatively uniform flow with an increase in pressure, as described with respect to Fig. 3 in the above-cited WO-A2-02 15670. This is schematically shown in Fig. 5, wherein "CP" represents the pressure at which the clearance (50 or 50') closes. In such a construction, the slack 6 (Fig. 3a, 3b) can be retained or omitted.

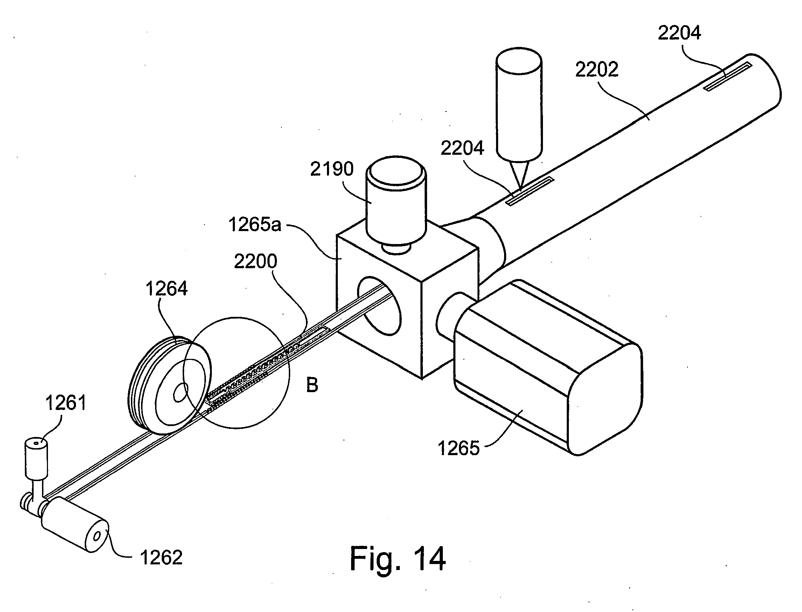

Figs. 6, 6a and 6b generally correspond to Figs. 5, 5a and 5b of the above-cited WO-A2-02 15670 for making the drip irrigation hose but illustrate a modification in the method of making such a hose. In this modification, the continuous rib 5 may be of the relatively inelastic material, such as polyethylene, extruded by extruder 51. However, the relatively elastic material of the emitter elements is of a thermosetting elastomer, preferably a silicone rubber, made of two materials, each originally in a liquid state, but capable of being cured into a solid state by cross-linking when mixed together in a heater-mixer. The cross-linking curing process produces a relatively elastic solid material which is thermosetting in nature. Such thermosetting material may not bond well to the polyethylene of the plastic tube in the produced drip irrigation hose, and therefore an adhesive coating may be applied to enhance the bonding, as described below with reference to Figs. 14-17b.

The known cross-linking curing process depends on time and temperature. For example, the curing can be effected in 30 seconds at 230°C, or in 2 minutes at 150°C. In the process of Fig. 6, the conditions of time and temperature in the heater-mixer are such that only a part of the curing takes place in the heater-mixer itself The remainder of the curing takes place later, after the intermittently formed strips exit from the heater-mixer.

Thus, as shown in Fig. 6, the two materials (A, B) producing the relatively elastic material formation is supplied to a heater-mixer 52 from two liquid sources 53, 54. The two liquids are mixed and heated to a temperature preferably lower than the normal recommended curing temperature. The cross-linking begins in the heater-mixer 52. The partially-crosslinked product is forced out by a piston 55 intermittently onto the moving surface of the polyethylene strip 2 to define the composite strip. The composite strip is embossed by the embossing wheel 64 to produce the teeth 45, 46 of the emitter elements. The so-produced composite strip thus includes the relatively elastic formation of the teeth 45, 46 defining turbulent flow passageways which regulate the flow in response to pressure, and the relative inelastic rib 5 laterally of the teeth.

One example of the two liquids that can be used for making the relatively elastic emitter elements is "Elastosil" (Reg. TM) LR 3153 A,B, supplied by Wacker Silicone. These liquid materials, when mixed and cured by cross-linking, produce a solvent-free, thermosetting, silicone rubber particularly useful for coating textile-braided cables. While the mixture is normally cured (cross-linked) by a high temperature applied for a short time, in the present case it is, preferably, only partially cured by the heat in the heater-mixer 52, the curing being completed subsequently over a period of time. The embossing wheel 64 may also be heated to enhance the cross-linking. In this construction, it is not necessary that the teeth of the silicone rubber be firmly welded to the plastic tube.

Fig. 7 illustrates a similar process for producing a drip irrigation hose in which the outer tube 1202 is of the seamless type, as illustrated described for example in Fig. 22 of the above-cited WO-A2-02 15670. To facilitate understanding, the same reference numerals are used, except that here the relatively elastic material is of the cross-linked silicon rubber, as described above with respect to Fig. 6. This material is applied to the strip 1203 of inelastic material (e.g., polyethylene), exiting from its extruder 1261, by the heater-mixer 52 supplied with the two liquids A, B from the two sources 53, 54. The relatively elastic material formation applied by the heater mixer 52 is embossed by embossing wheel 1264 to form the teeth 1245, 1246 of the labyrinths (Fig. 7a). The so-formed composite strip then passes through the cross-head 1265a of extruder 1265 which extrudes the tube 1202 around the strip. In this case, the extrusion process also heats the silicone rubber and aids in the cross-linking thereof.

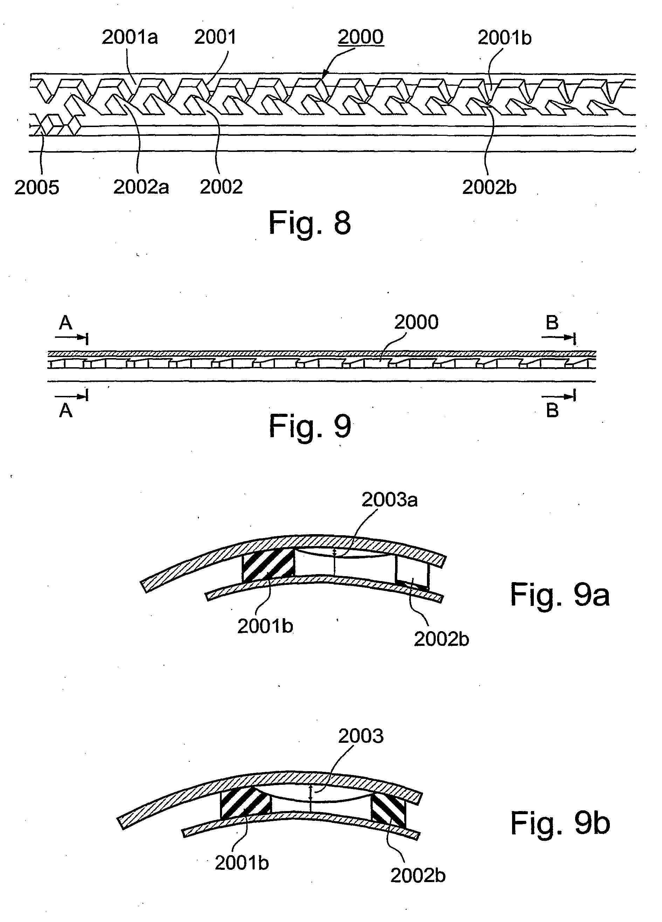

Figs. 8 and 9 illustrate a modification in the construction of each of the labyrinths, therein designated 2000, in order to produce sequentially-closing clearances, or a progressively-closing clearance, in accordance with constructions described in my U.S. Patent 5,400,973. Thus, as shown in Figs. 8 and 9, the two rows of the teeth 2001, 2002, define a turbulent flow passageway between them, including teeth 2001a, 2002a at one end having tips of fixed height, and teeth 2001b, 2002b at the opposite end having tips of progressively decreasing height and/or width.

Teeth 2001a, 2002a, at one end of each emitter element thus define a fixed pressure-dropping labyrinth devoid of a bypass clearance, to produce a fixed resistance to the water flow during both the unpressurized condition and pressurized condition of the hose.

On the other hand, teeth 2001b, 2002b define a regulating labyrinth having a clearance which progressively changes in height from one end of the labyrinth to the opposite end, thereby effectively producing a series of sequentially-closing clearances which progressively close with an increase in pressure at the respective labyrinth. Thus, in the initial, unpressurized condition of the hose, these clearances substantially bypass the regulating labyrinths to render each ineffective to restrict the flow; but as water pressure increases, these clearances are sequentially closed to render each regulating labyrinth effective to regulate the flow therethrough in response to the water pressure, as described in the above-cited Patent 5,400,973.

Fig. 9a illustrates the clearance 2003a at one end of a regulating labyrinth defined by teeth 2001b, 2002b; and Fig. 9b illustrates the larger clearance 2003b at the opposite end of the labyrinth defined by these teeth.

It will be appreciated that, where this feature is included in the drip irrigation hoses, other techniques for producing sequential-closing clearances could also be used in the regulating labyrinths. In the illustrated construction, the upstream portion of at least the strip of relatively elastic material defining the teeth 2002a of the fixed labyrinth is formed with slots 2005 (Fig 8) to serve as inlets into the respective labyrinths.

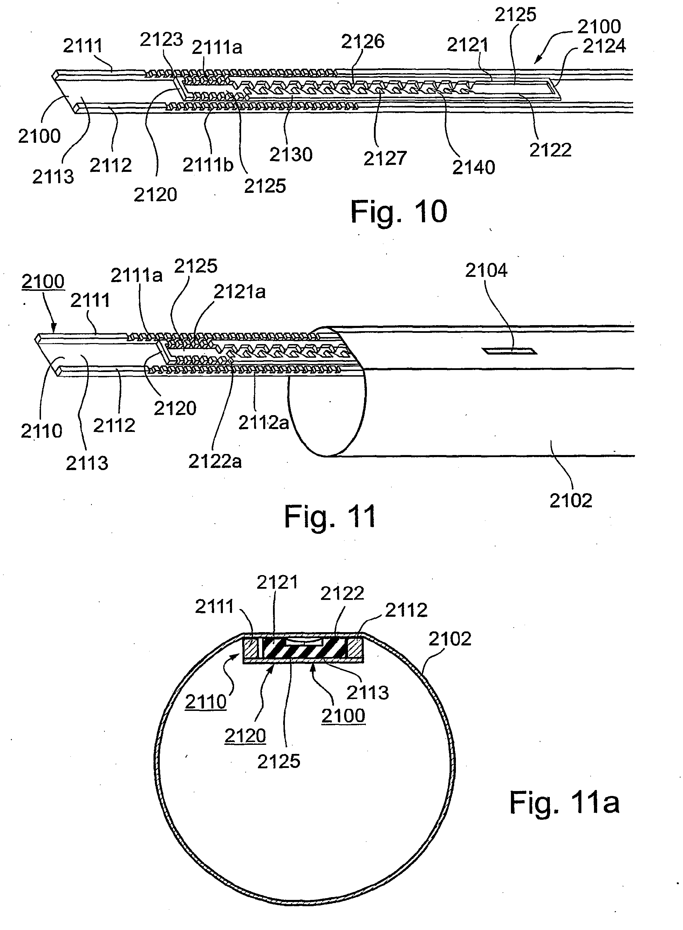

Figs. 10 and 11 illustrate another construction of emitter unit, generally designated 2100, for application to the inner surface of an outer plastic tube 2102 formed with outlets 2104 for discharging the water after traversing the respective labyrinth. Emitter element 2100 is in the form of a continuous composite strip constituted of a continuous strip 2110 of the relatively inelastic material, such as polyethylene; and a plurality of longitudinally-spaced strips 2120, each made of the relatively elastic material, such as elastomer, and defining the labyrinth to the respective outlet 2104.

Continuous strip 2110 of the relatively inelastic material is formed with a pair of spaced ribs 2111, 2112, along its opposite sides, joined together by a thin flexible web 2113. Each of the emitter element strips 2120 is of the relatively elastic material and is applied to web 2113 of the continuous strip 2110 between, and slightly spaced from, the two ribs 2111 and 2112. The two ribs 2111 and 2112 thus straddle, and are spaced from, the emitter elements 2120.

Each emitter element 2120 is of an open rectangular shape. Each is formed with a pair of opposed longitudinally-extending strips 2121, 2122 joined at the opposite ends by transversely-extending strips 2123, 2124, and all joined together by an underlayer 2125. The longitudinally-extending strips 2121, 2122 are shaped (e.g., by embossing wheel 1264, Fig. 7) into two groups of teeth 2126, 2127 integrally formed with the underlayer 2125, all of the relatively elastic material.

In the construction illustrated in Fig. 10, the two groups of teeth 2126, 2127 in each emitter unit 2120 also define two labyrinths, namely: (1) labyrinth 2130, in which the teeth are of fixed height to produce a fixed pressure drop in the water flowing therethrough; and (2) labyrinth 2140 in which the teeth are of varying height to define sequentially-closing clearances producing a self-regulated pressure drop in the water flowing through that labyrinth, as described above with respect to Figs. 8 and 9, and in the above-cited US Patent 5,400,973. The fixed-height teeth labyrinth 2130 is on the inlet, upstream end of each emitter unit 2120. It communicates with the water within the tube 2102 through slots 2111a, 2112a, formed in the ribs 2111 and 2112 of the relatively inelastic material, and through slots 2121a and 2122a formed in the strips 2121, 2122, of the relatively elastic material. As described above with respect to Figs. 8 and 9, a bypass clearance is provided, in the non-pressurized condition of the tube, only with respect to the teeth in the regulating labyrinth 2140, and not with respect to the teeth in the fixed pressure-drop labyrinth 2130.

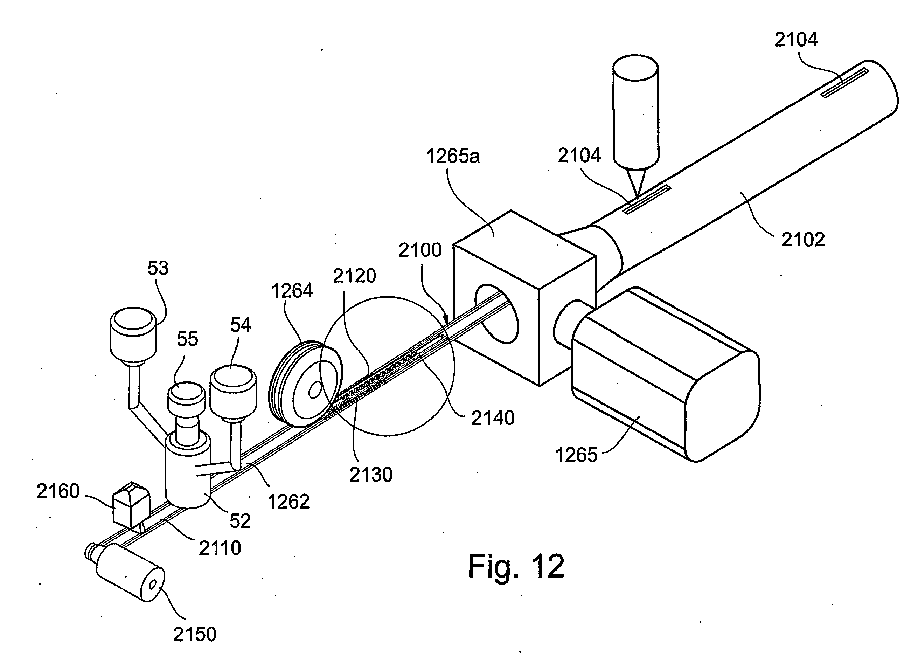

When the emitter unit 2100 illustrated in Fig. 10 is applied to the tube 2102, it is bonded to the inner surface of the tube at the outer surfaces of the ribs 2111, 2112 of strip 2110 of relatively inelastic thermoplastic material (e.g., polyethylene). The emitter units 2120, particularly when using the thermosetting elastomer material described above which does not bond well to a thermoplastic surface, preferably are not actually bonded to the inner surface of the tube 2102. Fig. 12 illustrates apparatus similar to that of Fig. 7 for producing the drip irrigation hose illustrated in Fig. 11. To facilitate understanding, those parts which are substantially the same as those illustrated in Fig. 7 are identified by the same reference numerals.

Thus, as shown in Fig. 12, the strip 2110 of the relatively inelastic material is extruded via an extruder 2150 and is subjected first to a corona discharger 2160 before the relatively elastic material is applied by the heater/mixer 52 supplied from the two liquid sources 53, 54. As described earlier, the two materials are mixed and heated to a temperature lower than the normal curing temperature in the heater mixture 52 so as to begin the cross-linking; and the partially cross-linked product is forced out by piston 55 from the mixture intermittently onto the moving surface of the continuous strip 2110. The partially cross-linked formation 1262 is embossed by the embossing wheel 1264 to produce the emitter elements 2120, each including a fixed-height labyrinth 2130, and a varying-height labyrinth 2140, before entering the cross-head 1265a wherein the outer tube 2102 is extruded over the composite emitter strip 2100 by the extruder 1265.

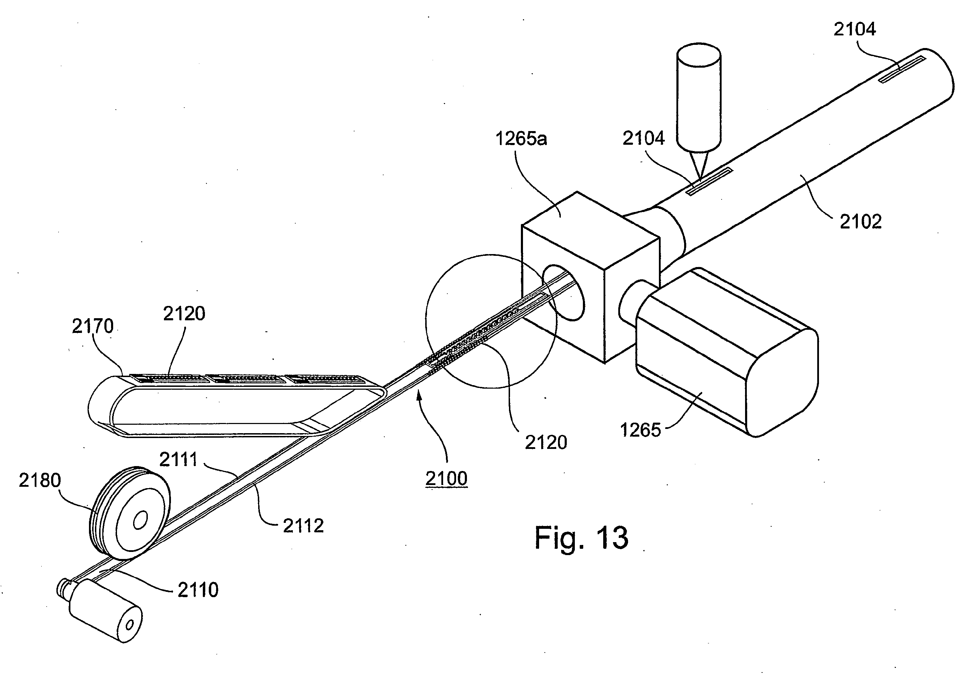

Fig. 13 illustrates other apparatus for producing the drip irrigation hose of Fig. 11. Thus, as shown in Fig. 13, the preformed elastic emitter elements 2120 are fed by conveyor 2170 onto the continuous strip 2110 of relatively inelastic material before the composite strip 2100 enters the extruder cross-head 1265a for extruding the outer tube 2102. Feeder 2170 is operated at a lower linear velocity than that of the continuous strip 2110 so that the relatively elastic emitter elements 2120 will be spaced longitudinally along the resulting composite strip 2100.

Since the apparatus illustrated in Fig. 13 does not include an embossing wheel corresponding to embossing wheel 1264 in Fig. 12 for forming the labyrinth in the relatively elastic element 2120, another embossing wheel 2180 is provided, upstream of conveyor 2170, to emboss the ribs 2111, 2112 of the continuous strip 2110 with the slits (2111a, 2112a, Figs. 10, 11) to define the inlets into the emitter elements 2120.

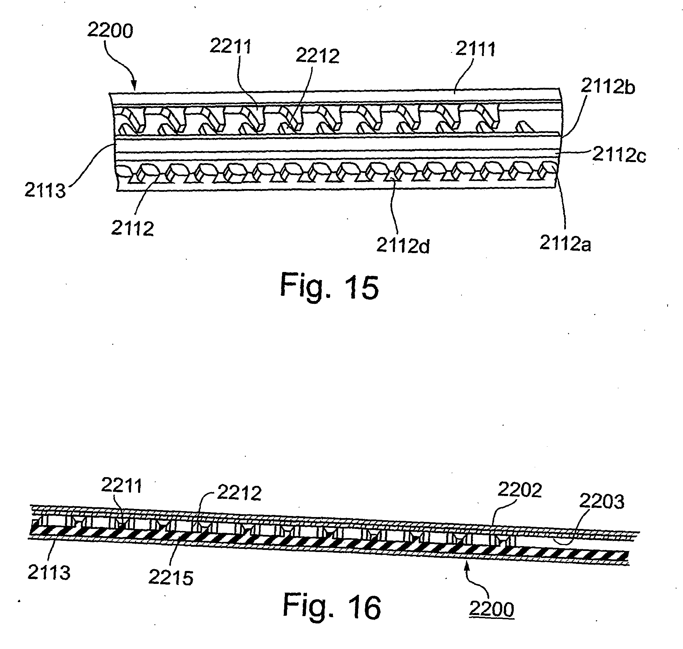

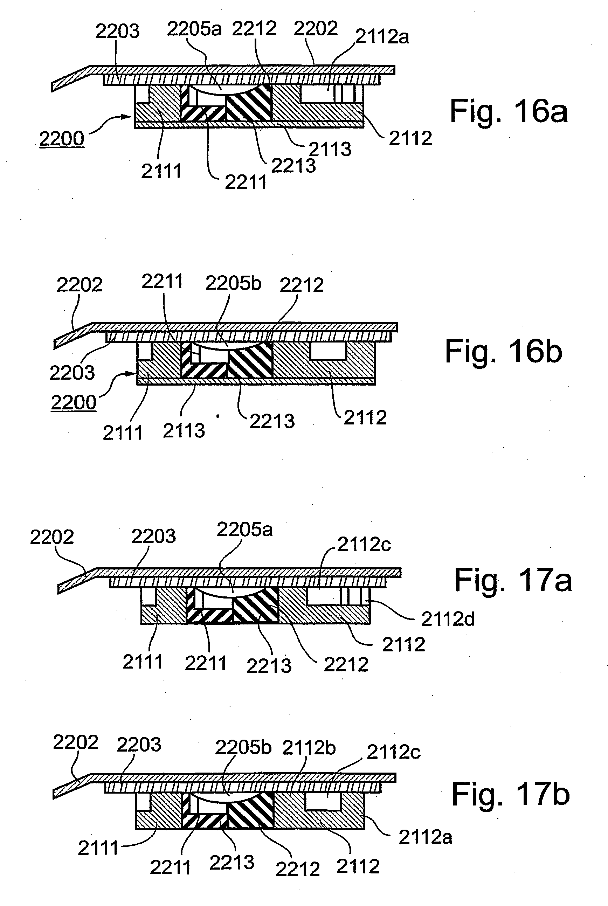

Fig. 14 illustrates apparatus similar to that of Fig. 22 of WO-A2-02 15670, but including a coating applicator 2190 for applying a coating, shown at 2203 in Fig. 16, of an adhesive material on the inner face of the extruded tube, shown at 2202, or on the outer face of the composite strip, shown at 2200, as the composite strip travels from the embossing wheel 1264 into the cross-head 1265a of the outer tube extruder 1265. Coating 2203 promotes the adhesion of the emitter strip to the inner surface of the excluded outer tube 2202 and also strengthens the outer tube 2202 at the outlet openings 2204. A material found particularly suitable for this purpose is one sold under the Trademark "POLYGLUE" supplied by SK Corporation. This material is an adhesive resin consisting of a modified polyolefin with functional groups to bond firmly to common polyolefins, polyamides, ethylene vinyl alcohol (EVOH), as well as wood and metals.

The apparatus illustrated in Fig. 14 is otherwise the same as described above with respect to Fig. 22 of WO-A2-02 15670.

Figs. 15 and 16 illustrate a fragment of a regulating labyrinth in each emitter element 2200 of the drip irrigation hose producing by the apparatus of Fig. 14; whereas Figs. 16a and 16b are enlarged fragmentary views of Fig. 16 illustrating the structure of each emitter element 2200 at the opposite ends of the respective labyrinth. Thus, as shown, the emitter element 2200 is bonded to the inner surface of the outer tube 2202 by the adhesive layer 2203 applied by the applicator 2190 (Fig. 14). The emitter element 2200 may be of any of the above-described constructions, but preferably is formed with a labyrinth having sequentially closing clearances, as indicated by the different size clearances 2205a, 2205b, in the two fragmentary views of Figs. 16a and 16b, respectively. As shown, the two groups of teeth 2211, 2212 of relatively elastic material are integrally formed with an underlayer 2215 of the relatively elastic material; and the two ribs 2111, 2112 of relatively inelastic material are joined by the web 2113 to which the relatively elastic material is applied.

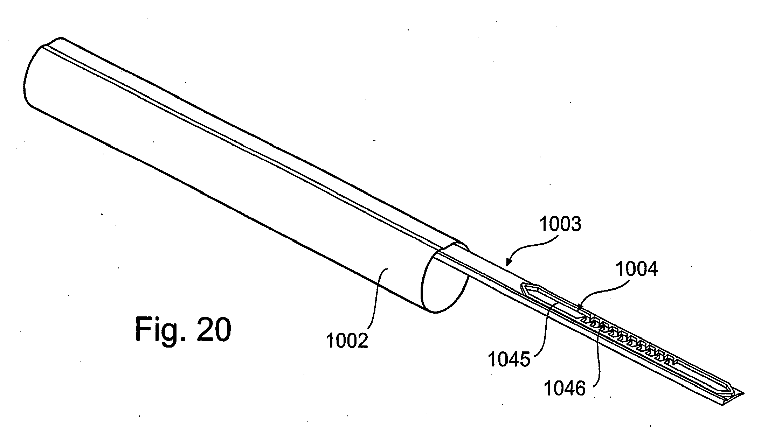

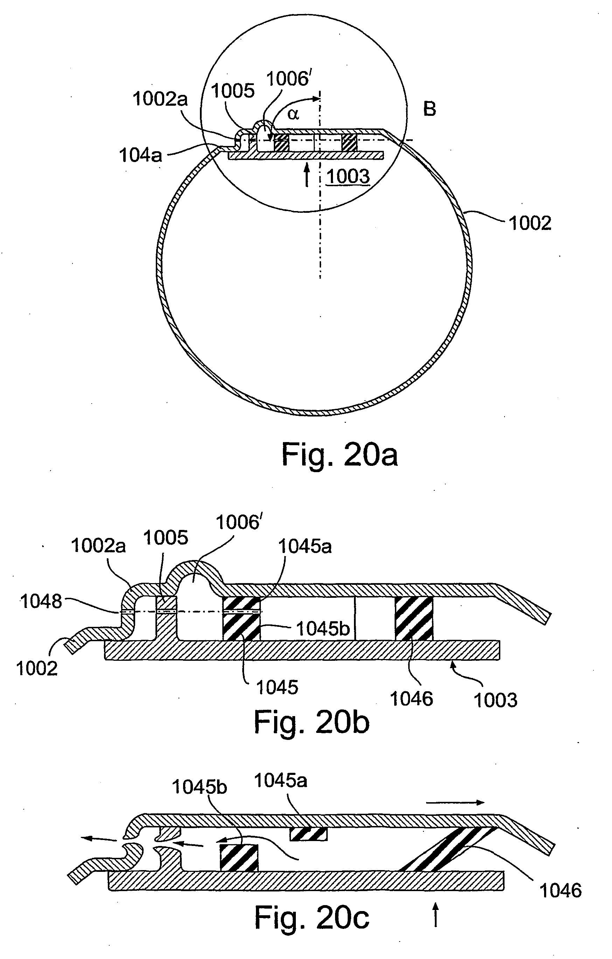

Figs. 17a and 17b are sectional views, corresponding to Figs. 16a and 16b, of a drip irrigation hose wherein the two strips 2111, 2112, of relatively inelastic material are not joined by a web, corresponding to web 2113 of relatively inelastic material, as shown in Figs. 10 and 11. In such a construction, the underlayer 2215 of the relatively elastic material is directly exposed to the water within the drip irrigation hose, thereby making this labyrinth more sensitive to changes in the water pressure for regulating the flow therethrough. This type of construction may be produced by co-extruding the two strips 2111, 2112 of relatively inelastic material in a continuous manner, while either continuously, or intermittently, extruding the relatively elastic material 2215 between the two strips 2111, 2112, such that strip 2215 straddles and is joined to, the two strips 2111, 2112, as described for example with reference to Fig. 20a of the above-cited WO-A2-02 15670.

In both constructions, namely the construction illustrating the underlying web 2113 of relatively inelastic material as shown in Figs. 15 and 16, or not including that web as shown in Figs. 17a and 17b, one of the ribs 2112 of relatively inelastic material is constituted of two longitudinally-extending rib sections 2112a, 2112b spaced from each other to define an inlet channel 2112c communicating with each of the emitter elements spaced along the length of the drip irrigation tube. As shown particularly in Figs. 15, 16a and 17a, the outer rib section 2112a of rib 2112 is formed with a plurality of slots 2112d establishing communication between the interior of the outer tube in the drip irrigation hose and the inlet channel 2112c.

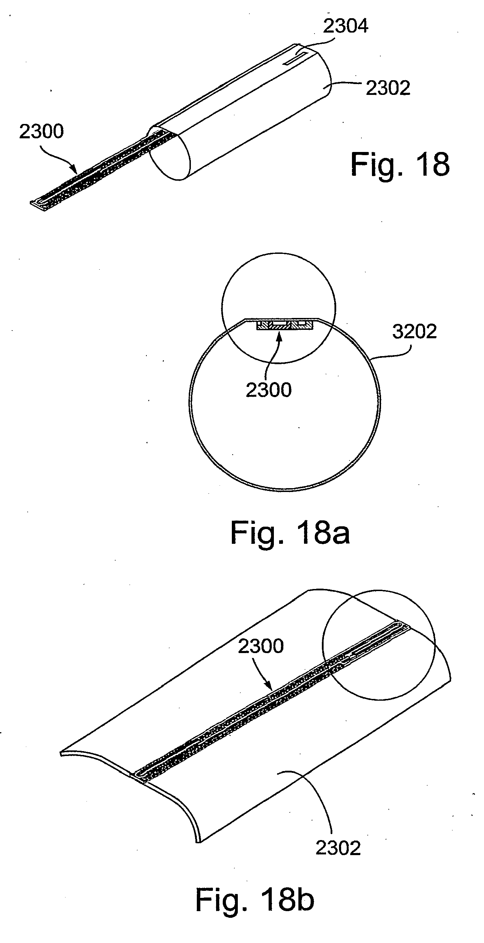

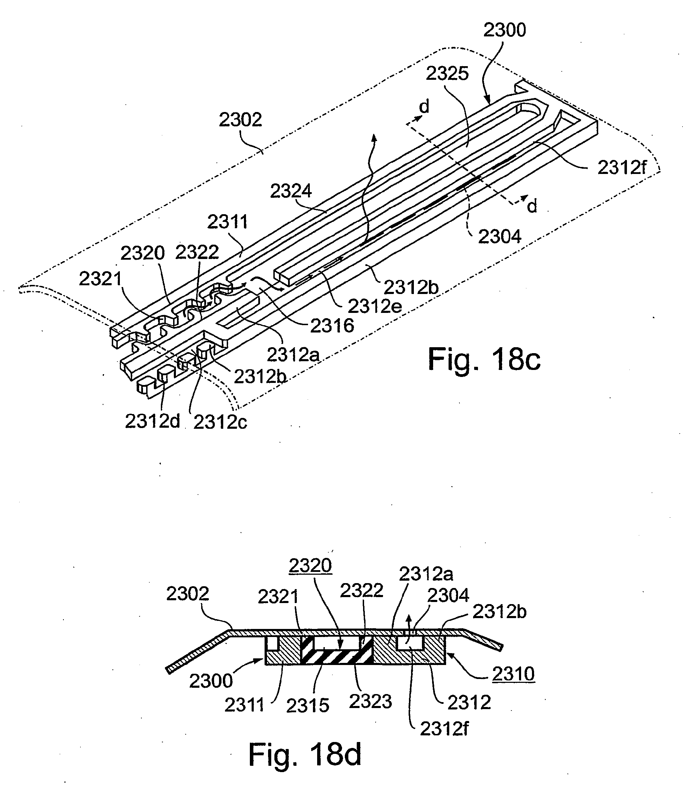

Figs. 18, 19 and 20 illustrate constructions of the drip irrigation hose according to the invention. These constructions relate particularly to the configuration of the relatively inelastic material, (e.g., polyethylene), to have such material define, not only the inlet channels to the labyrinths, but also the outlet channels from the labyrinths to the tube outlet openings (e.g., 48, Fig. 1, or 2104, Fig. 11).

For purposes of example, Fig. 18 illustrates the emitter element, therein generally designated 2300, bonded to the inner surface of an extruded tube 2302 formed with an elongated slot 2304 for each of the tube outlets.

As best seen in Figs. 18c and 18d, particularly illustrating the construction of each emitter element at the output end of the respective labyrinth, each emitter element includes, as described above with respect to Figs. 17a and 17b, a formation 2310 of relatively inelastic material (e.g., polyethylene), constituted of two ribs 2311, 2312, straddling the opposite sides of a formation 2320 of relatively elastic material, such as one of the above-described elastomers. The elastomeric material 2320 is shaped to define the two groups of teeth 2321, 2322, and the common underlayer 2323, producing the turbulent flow passageway of the respective labyrinth. One of the ribs 2312 of the relatively inelastic material (e.g., polyethylene) is formed with the two rib section 2312a, 2312b, to define the inlet passageway 2312c (Fig. 18c) between them, as described above with respect to Figs. 16 and 17, including the slots 2312d in rib section 2312b to serve as the inlets into the inlet passageway 2312c. The inlet passageway 2312c communicates with the inlet end of each labyrinth defined by the teeth 2321, 2322.

In the construction illustrated in Figs. 18 - 18d, rib section 2312 of the relatively inelastic material is also shaped to define an outlet passageway, shown at 2312e in Fig. 18c, leading from the outlet end of the respective labyrinth and communicating with its respective outlet opening 2304 in the tube 2302 for discharging the water therefrom at a slow rate. As shown in Fig. 18c, the outlet channel 2312e communicates with its respective outlet opening 2304 via an outlet chamber 2312f also formed in rib section 2312 of the relatively inelastic material 2310.

Outlet chamber 2312f communicates with the outlet end of its respective labyrinth by providing one of the strips 2321 of the relatively elastic material defining one group of teeth, with a U-shaped extension 2324 defining an outlet channel 2325 for the respective labyrinth communicating via an opening 2316 with the respective outlet chamber 2312f.

The construction as illustrated in Fig. 18, and particularly in Figs. 18c and 18d, provides the important further advantage of enabling the relatively inelastic material 2310 to reinforce each of the outlet openings 2304.

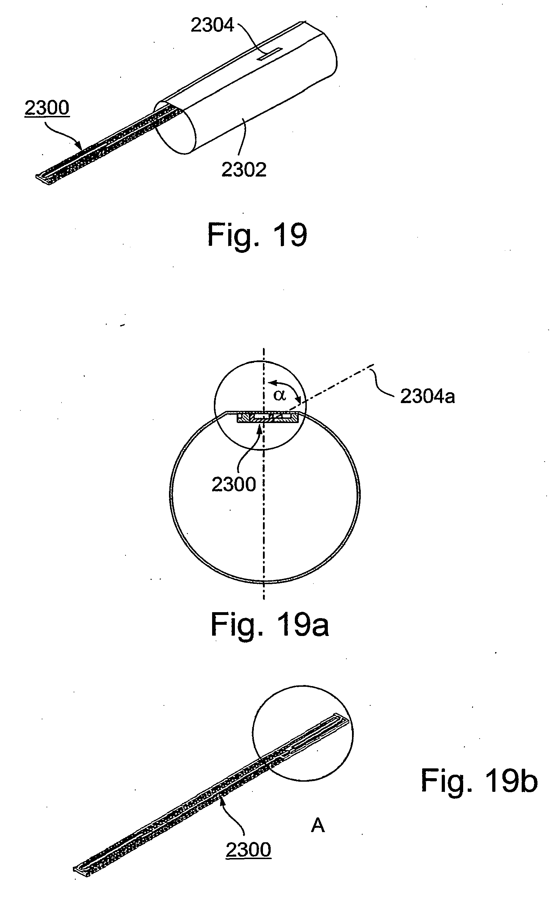

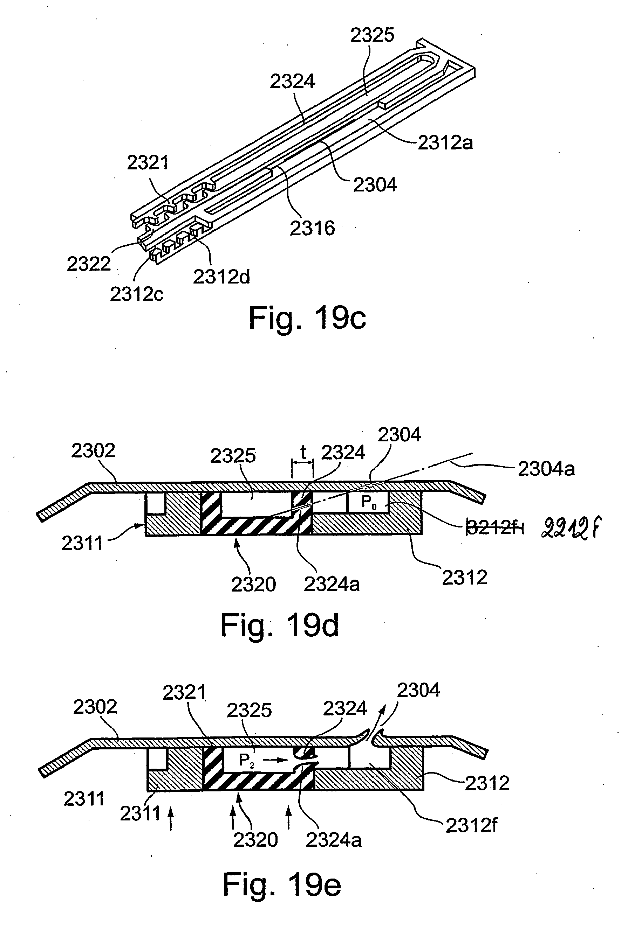

Fig. 19, and its related views of Figs. 19a - 19d, illustrate a drip irrigation hose of basically the same construction as described above with respect to Fig. 18, and therefore its corresponding parts have been correspondingly numbered to facilitate understanding. The construction of Figs. 19 and 19a - 19e, however, provides an additional advantage to the drip irrigation hose, namely the advantage of closing the outlet end of each emitter element until the pressure within the drip irrigation hose is at a minimum positive pressure. Such a feature is advantageous in reducing wastage of water, by blocking water discharge when the hose is not properly pressurized for efficient water distribution, and also in reducing the possibility that external clogging particles may enter the labyrinths of the hose.

To provide the foregoing advantages, the outlet opening 2304, passing through the outlet chamber 2312f of relatively inelastic material, also passes through the adjacent wall of the extension 2324 of relatively elastic material so as to communicate, via chamber 2325, with the outlet end of the respective labyrinth. As shown particularly in Figs. 19a and 19d, the outlet opening 2304 is of an elongated slit-configuration, and is effected along a line 2304a which forms an angle "α" to a line 2304b extending from the center of the tube 2302 through the flowpath of the respective emitter element.

In a conventional drip irrigation hose, the angle "α" is zero degrees; that is, the outlet opening is coaxial with a line from the center of the drip irrigation hose through the flowpath of the respective emitter element. In the construction illustrated in Figs. 19a and 19d, however, angle "α" is not zero, but is preferably from 15-90°. In Fig. 19a, it is shown as being approximately 60°. Fig. 20, described below, illustrates a construction wherein "α" is about 90°.

When opening 2324a of such slit opening is formed at angle "α" through extension wall 2324 of relatively elastic material, the thickness of the latter wall can be dimensioned such that this opening is normally closed, but automatically opens when the pressure within the respective labyrinth exceeds a predetermined value. As shown in Figs. 19d and 19c, such a slit-configuration opening 2324a formed in wall 2324 thus acts like a one-way valve, being normally closed against the entry of clogging material or the exit of water therefrom, until the water pressure within the respective labyrinth reaches a predetermined minimum value, whereupon it automatically opens to discharge water through the respective outlet opening 2304.

Figs. 20 and 20a - 20c illustrate the foregoing feature implemented in another construction of a drip irrigation hose, similar to the hose illustrated in Figs. 15, 16, and 18 in the above-cited WO-A2-02 15670. To facilitate understanding, the same reference numerals have been used for corresponding elements.

Briefly, and as more particularly described therein, the outer tube is an extruded tube 1002 and has bonded, to its inner surface, a composite strip 1003 formed with a continuous rib 1005 of the relatively inelastic material, (e.g., polyethylene) and with a plurality of emitter elements 1004 each including a pair of longitudinally-extending strips 1045, 1046, of relatively elastic material (e.g., an elastomer) formed with the alternatingly projecting teeth to define the labyrinth-type turbulent flow passage. The outer tube 1002 is formed with a slack 1006 permitting the tube to be slightly expanded, when pressurized, thereby producing a tangential force with respect to the strips 1045, 1046 of relatively elastic material, to change the turbulent flow passageway produced therebetween when the tube is pressurized, as more particularly described in that patent application.

In the drip irrigation hose illustrated in Figs. 20 - 20c, the slack permitting expansion of the tube when pressurized extends outwardly, as shown at 1006', rather than inwardly. In addition, the outer tube 1002 includes an inwardly-extending step as shown at 1002a between slack 1006' and the composite emitter strip 1003.

As shown in Figs. 20a and 20b, the outlet opening 1048 is formed as an elongated slit through the inwardly-extending step 1002a of the outer tube 102, through rib 1005 of the relatively inelastic material and through wall 1045 of the relatively elastic material. Outlet opening 1048 is of an elongated slit-formation, as described above with respect to Figs. 19 and 19a - 19e. whereas in the latter Figs. the outlet opening (2304) was at an angle "α" of about 60° with respect to a line from the center of the tube perpendicularly through the flow path of the respective emitter element, in the construction of Figs. 20 - 20c, angle "α" is 90° (as shown in Fig. 20a). Slit opening 104a is of a length such that, when it passes through wall 1045 of the relatively elastic material, it splits the latter wall into two sections 1045a, 1045b which normally engage each other (as shown in Fig. 20b), but which move apart, as shown in Fig. 20c, when the hose is pressurized. Slit opening 1048 through wall 1045 of the relatively elastic material thus serves as a one-way valve which is normally closed (Fig. 20b) to block the communication from the outlet end of the respective labyrinth to the outlet opening 1048. However, when the pressure within the hose builds up, slack 1006' permits the outer tube to expand, thereby moving the two sections 1045a, 1045b of resilient wall 1045 apart, (Fig. 20c), opening the passage from the emitter element to the respective outlet opening 1048 to produce a discharge of the water therefrom.

Thereafter, the shape of the labyrinth defmed by the two strips 1045, 1046 of relatively elastic material changes in response to the pressure to regulate the water flow through the respective labyrinth in response to water pressure.

## Claims

1. A drip irrigation hose, comprising:
a tube (2302) for conducting pressurized water through its interior and formed with a plurality of tube outlet openings (2304) for discharging water at longitudinally-spaced locations along the length of the tube (2302);
and a plurality of emitter elements (2300) secured within said tube (2302) at longitudinally-spaced locations along its length to define a plurality of labyrinths, each having an inlet passageway (2312c) in communication with the interior of the tube (2302), and an outlet passageway (2312e) in communication with a said tube outlet opening (2304) for discharging water therefrom at a slow rate;
said plurality of emitter elements (2300) including a relatively elastic material (2320) shaped in the form of a plurality of groups of teeth (2321, 2322), each group defining a said labyrinth at each of said longitudinally spaced locations along the length of said tube (2302);
**characterized in that** said plurality of emitter elements (2300) are bonded to a common continuous strip of a relatively inelastic material (2310) shaped to define at least an outlet passageway for each labyrinth connecting its outlet passageway (2312e) to a said tube outlet opening (2304) for discharging the water therefrom.

2. The drip irrigation hose according to Claim 1, **characterized in that** said relatively elastic material (2320) of said plurality of emitter elements is also in the form of a continuous strip and is bonded to said continuous strip (2310) of relatively inelastic material.

3. The drip irrigation hose according to Claim 1, **characterized in that** said outlet passageway (2312e) defined by said relatively inelastic material includes an outlet chamber (2312f) communicating with each of said tube outlet openings (2304) for discharging water therefrom.

4. The drip irrigation hose according to Claim 1, **characterized in that** said relatively inelastic material (2310) includes a rib formation (2312a) configured to define, with the inner surface of the tube (2302), said outlet passageway (2312e) and an outlet chamber (2312f) therein at the outlet end of each labyrinth.

5. The drip irrigation hose according to Claim 1, **characterized in that** each of said tube outlet openings (2304) is defined by an opening passing through said tube (2302) and through said relatively inelastic material (2310) at the outlet passageway for the respective labyrinth.

6. The drip irrigation hose according to Claim 1, **characterized in that** each of said outlet openings (2304) passing through said tube (2302) also passes (2322) through a wall of relatively elastic material (2310).

7. The drip irrigation hose according to Claim 6, **characterized in that** each of said outlet openings (2304) through said wall (2324) of relatively elastic material extends at an angle (α) of 15°-90° with respect to a line (2304a) extending from the center of said tube (2302) perpendicularly through a labyrinth.

8. The drip irrigation hose according to Claim 7 , **characterized in that** said tube (2302) is formed with an inwardly-extending step (1002a) aligned with said outlet chambers, and each of said outlet openings (2304) extends through said step, through the wall of said relatively inelastic material defining said outlet chamber, and through a wall of said relatively elastic material at the end of the respective labyrinth at an angle (α) which is substantially 90° with respect to a line extending from the center of said tube perpendicularly through the respective labyrinth.

9. The drip irrigation hose according to Claim 6, **characterized in that** each of said openings (2304) through said wall (2324) of relatively elastic material splits said wall into two parts such that both parts engage each other in the non-pressurized condition of the tube for normally closing the respective opening, but move apart to open the respective opening when the water pressure within the tube at the respective labyrinth reaches a predetermined value.

10. The drip irrigation hose according to Claim 1, **characterized in that** it is formed with a clearance (50) between the inner surface of said tube (2302) and said teeth (2321, 2322) normally bypassing at least a part of each labyrinth in the non-pressurized condition of the tube, which clearance (50) is closed in the pressurized condition of the tube (2302) to render said labyrinths effective to regulate the flow therethrough in response to pressure.

11. The drip irrigation hose according to Claim 10, **characterized in that** the tips of said teeth (2321; 2322) are shaped to define said clearance.

12. The drip irrigation hose according to Claim 10, **characterized in that** said clearance (50) is defined by a longitudinally-extending slack (6) in said tube (2302).

13. The drip irrigation hose according to Claim 10, **characterized in that** said relatively elastic (2323) material of the teeth is directly exposed to the pressurized water within said tube when said tube conducts pressurized water.

14. The drip irrigation hose according to Claim 13, **characterized in that** at least one of said ribs of relatively inelastic material is formed with a plurality of slots (2313, 2312c) to define inlets to said labyrinths.

15. The drip irrigation hose according to Claim 10, **characterized in that** said clearance (2003) between the inner surface of said tube (2302) and said teeth of each labyrinth progressively changes in height from the inlet end to the outlet end of the respective labyrinth in the non-pressurized condition of the tube (2302), such that pressurizing the tube progressively closes said clearance (2003) of the respective labyrinth according to the pressure at the location of the respective labyrinth.

16. The drip irrigation hose according to Claim 1, **characterized in that** said tube is a seamed tube (2302), and said plurality of emitter elements (2300) are secured within the seam of said seamed tube (2302).

17. The drip irrigation hose according to Claim 1, **characterized in that** said tube is an extruded tube (2302), and said plurality of emitter elements (2300) are bonded to the inner surface of said extruded tube (2302).

## Patentansprüche

1. Tropfbewässerungsschlauch, umfassend:
eine Röhre (2302) zum Führen von Druckwasser durch das Innere derselben, und die mit einer Vielzahl von Röhrenauslassöffnungen (2304) gebildet ist, um das Wasser an längsseitig an der Röhre (2302) entlang beabstandeten Stellen abzulassen;
und eine Vielzahl von Senderelementen (2300), die im Innern der Röhre (2302) an längsseitig an dieser entlang beabstandeten Stellen befestigt sind, um eine Vielzahl von Labyrinthen zu definieren, die jeweils einen Einlassdurchgang (2312c) in Verbindung mit dem Innern der Röhre (2302) und einen Auslassdurchgang (2312e) in Verbindung mit einer Röhrenauslassöffnung (2304) aufweisen, um das Wasser daraus langsam abzulassen;
wobei die Vielzahl von Senderelementen (2300) ein relativ elastisches Material (2320) umfasst, das in Form einer Vielzahl von Zahngruppen (2321, 2322) gestaltet ist, wobei jede Gruppe ein Labyrinth an jeder der längsseitig an der Röhre (2302) entlang beabstandeten Stellen definiert;
**dadurch gekennzeichnet, dass** die Vielzahl von Senderelementen (2300) mit einem gemeinsamen durchgehenden Band aus einem relativ unelastischen Material (2310) verschweißt ist, das gestaltet ist, um mindestens einen Auslassdurchgang für jedes Labyrinth zu definieren, das seinen Auslassdurchgang (2312e) mit einer Röhrenauslassöffnung (2304) verbindet, um das Wasser daraus abzulassen.

2. Tropfbewasserungsschlauch nach Anspruch 1, **dadurch gekennzeichnet, dass** das relativ elastische Material (2320) der Vielzahl von Senderelementen ebenfalls in Form eines durchgehenden Bandes vorliegt und mit dem durchgehenden Band (2310) aus relativ unelastischem Material verschweißt ist.

3. Tropfbewässerungsschlauch nach Anspruch 1, **dadurch gekennzeichnet, dass** der Auslassdurchgang (2312e), der von dem relativ unelastischen Material definiert wird, eine Auslaßkammer (2312f) in Verbindung mit jedem der Röhrenauslassöffnungen (2304) umfasst, um das Wasser daraus abzulassen.

4. Tropfbewässerungsschlauch nach Anspruch 1, **dadurch gekennzeichnet, dass** das relativ unelastische Material (2310) eine Rippenbildung (2312a) umfasst, die konfiguriert ist, um mit der Innenfläche der Röhre (2302) den Auslassdurchgang (2312e) und eine Auslasskammer (2312f) darin am Auslassende des Labyrinths zu bilden.

5. Tropfbewässerungsschlauch nach Anspruch 1, **dadurch gekennzeichnet, dass** jede der Röhrenauslassöffnungen (2304) durch eine Öffnung definiert ist, die durch die Röhre (2302) und durch das relativ unelastische Material (2310) an dem Auslassdurchgang für das jeweilige Labyrinth geht.

6. Tropfbewässerungsschlauch nach Anspruch 1, **dadurch gekennzeichnet, dass** jede der Auslassöffnungen (2304), die durch die Röhre (2302) geht, auch durch eine Wand aus einem relativ elastischen Material (2310) geht (2322).

7. Tropfbewässerungsschlauch nach Anspruch 6, **dadurch gekennzeichnet, dass** jede der Auslassöffnungen (2304) durch die Wand (2324) aus relativ elastischem Material sich in einem Winkel (α) von 15° bis 90° im Verhältnis zu einer Linie (2304a) erstreckt, die sich von der Mitte der Röhre (2302) rechtwinklig durch ein Labyrinth erstreckt.

8. Tropfbewässerungsschlauch nach Anspruch 7, **dadurch gekennzeichnet, dass** die Röhre (2302) mit einer Stufe (1002a) gebildet ist, die sich nach innen erstreckt, die auf die Auslasskammern ausgerichtet ist, und jede der Auslassöffnungen (2304) sich durch die Stufe, durch die Wand aus relativ unelastischem Material, das die Auslasskammer definiert, und durch eine Wand aus dem relativ elastischen Material am Ende des jeweiligen Labyrinths in einem Winkel (α) erstreckt, der im Verhältnis zu einer Linie, die sich von der Mitte der Röhre rechtwinklig durch das jeweilige Labyrinth erstreckt, im Wesentlichen 90° beträgt.

9. Tropfbewässerungsschlauch nach Anspruch 6, **dadurch gekennzeichnet, dass** jede der Öffnungen (2304) durch die Wand (2324) aus relativ elastischem Material die Wand in zwei Teile unterteilt, so dass die beiden Teile im nicht unter Druck gesetzten Zustand der Röhre ineinander greifen, um die jeweilige Öffnung normal zu verschließen, sich jedoch voneinander entfernen, um die jeweilige Öffnung zu öffnen, wenn der Wasserdruck im Innern der Röhre an dem jeweiligen Labyrinth einen vorherbestimmten Wert erreicht.

10. Tropfbewässerungsschlauch nach Anspruch 1, **dadurch gekennzeichnet, dass** er mit einem Zwischenraum (50) zwischen der Innenfläche der Röhre (2302) und den Zähnen (2321, 2322), die normalerweise mindestens einen Teil jedes Labyrinths im nicht unter Druck gesetzten Zustand der Röhre umgehen, gebildet ist, wobei der Zwischenraum (50) im unter Druck gesetzten Zustand der Röhre (2302) geschlossen wird, um die Labyrinthe zu befähigen, den Fluss durch diese hindurch als Reaktion auf den Druck zu regulieren.

11. Tropfbewässerungsschlauch nach Anspruch 10, **dadurch gekennzeichnet, dass** die Spitzen der Zähne (2321, 2322) gestaltet sind, um den Zwischenraum zu definieren.

12. Tropfbewässerungsschlauch nach Anspruch 10, **dadurch gekennzeichnet, dass** der Zwischenraum (50) durch ein sich längsseitig erstreckendes Durchhängen (6) in der Röhre (2302) definiert wird.

13. Tropfbewässerungsschlauch nach Anspruch 10, **dadurch gekennzeichnet, dass** das relativ elastische Material (2323) der Zähne direkt dem Druckwasser im Innern der Röhre ausgesetzt ist, wenn die Röhre Druckwasser führt.

14. Tropfbewässerungsschlauch nach Anspruch 13, **dadurch gekennzeichnet, dass** mindestens eine der Rippen aus relativ unelastischem Material mit einer Vielzahl von Schlitzen (2313, 2312c) gebildet ist, um Einlässe zu dem Labyrinth zu definieren.

15. Tropfbewässerungsschlauch nach Anspruch 10, **dadurch gekennzeichnet, dass** sich der Zwischenraum (2003) zwischen der Innenfläche der Röhre (2302) und den Zähnen jedes Labyrinths nach und nach vom Einlassende zum Auslassende des jeweiligen Labyrinths im nicht unter Druck gesetzten Zustand der Röhre (2302) in der Höhe ändert, so dass das Unterdrucksetzen der Röhre den Zwischenraum (2003) des jeweiligen Labyrinths nach und nach je nach dem Druck an der Stelle des jeweiligen Labyrinths verschließt.

16. Tropfbewässerungsschlauch nach Anspruch 1, **dadurch gekennzeichnet, dass** die Röhre eine Nahtröhre (2302) ist und die Vielzahl von Senderelementen (2300) im Innern der Naht der Nahtröhre (2302) befestigt ist.

17. Tropfbewässerungsschlauch nach Anspruch 1, **dadurch gekennzeichnet, dass** die Röhre eine Strangpressröhre (2302) ist und die Vielzahl von Senderelementen (2300) an der Innenfläche der Strangpressröhre (2302) verschweißt ist.

## Revendications

1. Tuyau flexible d'irrigation goutte à goutte, comprenant :
un tube (2302) pour conduire de l'eau sous pression à travers son intérieur, et formé avec une pluralité d'ouvertures de sortie de tube (2304) pour évacuer l'eau à des emplacements espacés de façon longitudinale suivant la longueur du tube (2302) ;
et une pluralité d'éléments émetteurs (2300) fixés à l'intérieur dudit tube (2302) à des emplacements espacés de façon longitudinale suivant sa longueur pour définir une pluralité de labyrinthes, chacun ayant un passage d'entrée (2312c) en communication avec l'intérieur du tube (2302) et un passage de sortie (2312e) en communication avec une dite ouverture de sortie de tube (2304) pour évacuer l'eau lentement à partir de celle-ci ;
ladite pluralité d'éléments émetteurs (2300) comprenant un matériau (2320) relativement élastique, façonné sous la forme d'une pluralité de groupes de dents (2321, 2322), chaque groupe définissant un dit labyrinthe à chacun desdits emplacements espacés longitudinalement suivant la longueur dudit tube (2302) ;
**caractérisé en ce que** ladite pluralité d'éléments émetteurs (2300) est encollée sur un ruban continu commun d'un matériau relativement inélastique (2310) façonné pour définir au moins un passage de sortie pour chaque labyrinthe connectant son passage de sortie (2312e) à une dite ouverture de sortie de tube (2304) pour évacuer l'eau à partir de celle-ci.

2. Tuyau flexible d'irrigation goutte à goutte selon la revendication 1, **caractérisé en ce que** ledit matériau relativement élastique (2320) de ladite pluralité d'éléments émetteurs se présente également sous la forme d'un ruban continu et est encollé sur ledit ruban continu (2310) en matériau relativement inélastique.

3. Tuyau flexible d'irrigation goutte à goutte selon la revendication 1, **caractérisé en ce que** ledit passage de sortie (2312e) défini par ledit matériau relativement inélastique comprend une chambre de sortie (2312f) en communication avec chacune desdites ouvertures de sortie de tube (2304) pour évacuer l'eau à partir de celle-ci.

4. Tuyau flexible d'irrigation goutte à goutte selon la revendication 1, **caractérisé en ce que** ledit matériau relativement inélastique (2310) comprend une formation de nervure (2312a) configurée pour définir, avec la surface intérieure du tube (2302), ledit passage de sortie (2312e) et une chambre de sortie (2312f) dans celui-ci au niveau de l'extrémité de sortie de chaque labyrinthe.

5. Tuyau flexible d'irrigation goutte à goutte selon la revendication 1, **caractérisé en ce que** chacune desdites ouvertures de sortie de tube (2304) est définie par une ouverture passant à travers ledit tube (2302) et à travers ledit matériau relativement inélastique (2310) au niveau du passage de sortie pour le labyrinthe respectif.

6. Tuyau flexible d'irrigation goutte à goutte selon la revendication 1, **caractérisé en ce que** chacune desdites ouvertures de sortie (2304) passant à travers ledit tube (2302) passe également (2322) à travers une paroi en matériau relativement élastique (2310).

7. Tuyau flexible d'irrigation goutte à goutte selon la revendication 6, **caractérisé en ce que** chacune desdites ouvertures de sortie (2304) à travers ladite paroi (2324) en matériau relativement élastique s'étend sous un angle (α) de 15° à 90° par rapport à une ligne (2304a) s'étendant du centre dudit tube (2302) perpendiculairement à travers un labyrinthe.

8. Tuyau flexible d'irrigation goutte à goutte selon la revendication 7, **caractérisé en ce que** ledit tube (2302) est formé avec un gradin (1002a) s'étendant vers l'intérieur, aligné sur lesdites chambres de sortie, et chacune desdites ouvertures de sortie (2304) s'étend à travers ledit gradin, à travers la paroi dudit matériau relativement inélastique définissant ladite chambre de sortie, et à travers une paroi dudit matériau relativement élastique à l'extrémité du labyrinthe respectif sous un angle (α) qui est substantiellement de 90° par rapport à une ligne s'étendant depuis le centre dudit tube perpendiculairement à travers le labyrinthe respectif.

9. Tuyau flexible d'irrigation goutte à goutte selon la revendication 6, **caractérisé en ce que** chacune desdites ouvertures (2304) à travers ladite paroi (2324) en matériau relativement élastique divise ladite paroi en deux parties, de sorte que les deux parties s'engagent l'une dans l'autre à l'état non pressurisé du tube pour fermer normalement l'ouverture respective, mais s'écartent pour ouvrir l'ouverture respective lorsque la pression de l'eau à l'intérieur du tube au niveau du labyrinthe respectif atteint une valeur prédéterminée.

10. Tuyau flexible d'irrigation goutte à goutte selon la revendication 1, **caractérisé en ce qu'**il est formé avec un dégagement (50) entre la surface intérieure dudit tube (2302) et lesdites dents (2321, 2322) contournant normalement au moins une partie de chaque labyrinthe à l'état non pressurisé du tube, ledit dégagement (50) étant fermé à l'état pressurisé du tube (2302) pour permettre auxdits labyrinthes de réguler l'écoulement à travers ceux-ci en réponse à la pression.

11. Tuyau flexible d'irrigation goutte à goutte selon la revendication 10, **caractérisé en ce que** les pointes desdites dents (2321, 2322) sont façonnées pour définir ledit dégagement.

12. Tuyau flexible d'irrigation goutte à goutte selon la revendication 10, **caractérisé en ce que** ledit dégagement (50) est défini par du mou (6) s'étendant de façon longitudinale dans ledit tube (2302).

13. Tuyau flexible d'irrigation goutte à goutte selon la revendication 10, **caractérisé en ce que** ledit matériau relativement élastique (2323) des dents est directement exposé à l'eau pressurisée à l'intérieur dudit tube lorsque ledit tube conduit de l'eau pressurisée.

14. Tuyau flexible d'irrigation goutte à goutte selon la revendication 13, **caractérisé en ce qu'**au moins l'une desdites nervures en matériau relativement inélastique est formée avec une pluralité de fentes (2313, 2312c) pour définir des entrées vers ledit labyrinthe.

15. Tuyau flexible d'irrigation goutte à goutte selon la revendication 10, **caractérisé en ce que** ledit dégagement (2003) entre la surface intérieure dudit tube (2302) et lesdites dents de chaque labyrinthe change progressivement de hauteur entre l'extrémité d'entrée et l'extrémité de sortie du labyrinthe respectif à l'état non pressurisé du tube (2302), de sorte que la mise sous pression du tube ferme progressivement ledit dégagement (2003) du labyrinthe respectif selon la pression à l'emplacement du labyrinthe respectif.

16. Tuyau flexible d'irrigation goutte à goutte selon la revendication 1, **caractérisé en ce que** ledit tube est un tube à couture (2302), et ladite pluralité d'éléments émetteurs (2300) est fixée à l'intérieur de la couture dudit tube à couture (2302).

17. Tuyau flexible d'irrigation goutte à goutte selon la revendication 1, **caractérisé en ce que** ledit tube est un tube extrudé (2302), et ladite pluralité d'éléments émetteurs (2300) est encollée à la surface intérieure dudit tube extrudé (2302).
